# EUROPEAN PATENT APPLICATION

(11) **EP 1 788 806 A1**
(43) Date of publication of application: **23.05.2007**
(21) Application number: 05767114.1
(22) Date of filing: 01.08.2005
(51) Int. Cl.: H04N 5/765, G11B 20/10, H04N 5/91

(54) **INFORMATION RECORDING DEVICE AND METHOD, INFORMATION REPRODUCTION DEVICE AND METHOD, AND COMPUTER PROGRAM**

(30) Priority: 03.08.2004 JP 2004226603
(71) Applicant: Pioneer Corporation, Tokyo 153-8654 (JP)
(72) Inventor: FURUTA, Hirotaka c/o PIONEER CORPORATION, Tokorozawa-shi, Saitama 3598522 (JP)
(74) Representative: Haley, Stephen
(86) International application number: PCT/JP2005/014038
(87) International publication number: WO 2006/013820

(57) **Abstract**

An information recording apparatus comprising a receiving device for receiving a carrier signal, which carries a broadcast program and in which program information for identifying the broadcast program is embedded at predetermined time intervals. A recording device for recording the carried broadcast program by a title unit set by a user so as to include a plurality of broadcast programs, onto an information recording medium, on the basis of the received carrier signal; and a determining device for determining program information corresponding to a broadcast program having a longest recording time in the title unit, out of the embedded program information, as correspondence program information corresponding to the title unit recorded or to be recorded, on the basis of the received carrier signal.

## Description

### Technical Field

The present invention relates to an information recording apparatus and an information recording method capable of obtaining program information superimposed on a broadcast wave and capable of recording a broadcast program onto an information recording medium, such as a hard disk and a DVD, for example, an information reproducing apparatus and an information reproducing method, and a computer program.

### Background Art

On an information recording / reproducing apparatus, such as a DVD recorder, provided with a hard disk drive (hereinafter referred to as a "HDD", as occasion demands) and capable of writing information onto various information recording media, a broadcast program from television broadcast in digital form (hereinafter referred to as "digital broadcast", as occasion demands) is received via IEEE (Institute of Electrical and Electronic Engineers) 1394, which is a next-generation high-speed SCSI (Small Computer System Interface) standard, represented by various i Link etc., and it is recorded directly onto an information recording medium, such as a hard disk (hereinafter referred to as a "HD", as occasion demands) and a DVD.

In the carrier signal of a broadcast wave by this digital broadcast, various program information is superimposed at predetermined time intervals. The program information includes attribute information, which allows identification of a broadcast program that is currently received, such as a broadcast program name, and a channel number of the broadcast program, and a broadcast format, like high definition, for example. A user who is the viewing audience of the digital broadcasting (hereinafter referred to as a "user", as occasion demands), records the program information into a title, which is an arbitrary recording unit (corresponding to the "title unit" of the present invention), together with the content data of the broadcast program. The information recording / reproducing apparatus performs a process of extracting the program information in order to display a list of the title including thumbnail.

With regard to the process of extracting the program information, there is suggested a technology of determining the program information recorded in the head in the title which is the arbitrary recording unit, i.e. the program information firstly obtained by the information recording / reproducing apparatus, as the attribute information of the title (i.e. the program information as the representative of the title). Moreover, there is also suggested a technology of determining, as the attribute information of the title, the program information obtained a particular time after the recording is started, by the information recording / reproducing apparatus.

Patent document 1: Japanese Patent Application Laid Open NO. 2002-262224

### Disclosure of Invention

### Subject to be Solved by the Invention

However, the title that the user arbitrarily determines the recording time is not always constructed from one broadcast program. More specifically, if a 7pm to 8pm broadcast program that the user desires is recorded, it is common to start the recording from 6:58pm or end the recording at 8:02pm. In this case, in the title, a plurality of types of program information is recorded correspondingly to a plurality of broadcast programs. Thus, if the program information recorded in the head is simply determined as the attribute information of the title in accordance with the above-mentioned algorithm, there is such a technical problem that it is highly likely not the program information of the broadcast program that the user intends to record. Moreover, there is also such a similar technical problem that even the program information obtained a particular time after the recording is started, by the information recording / reproducing apparatus, is highly likely different from what the user expects.

It is therefore an object of the present invention to provide an information recording apparatus, an information recording method, an information reproducing apparatus and an information reproducing method, which enable allocation of the program information of the broadcast program that the users intends to record, for the attribute information of the title in which a plurality of broadcast programs are recorded, for example, and a computer program which makes a computer function as the information recording apparatus and the information reproducing apparatus.

### Means for Solving the Subject

### (Information Recording Medium)

The above object of the present invention can be achieved by an information recording apparatus provided with: a receiving device for receiving a carrier signal, which carries a broadcast program and in which program information for identifying the broadcast program is embedded at predetermined time intervals; a recording device for recording the carried broadcast program by a title unit set by a user so as to include a plurality of broadcast programs, onto an information recording medium, on the basis of the received carrier signal; and a determining device for determining program information corresponding to a broadcast program having a longest recording time in the title unit, out of the embedded program information, as correspondence program information corresponding to the title unit recorded or to be recorded, on the basis of the received carrier signal.

According to the information recording apparatus of the present invention, firstly, by using the receiving device, at least one broadcast program and the program information embedded at predetermined time intervals are received via the carrier signal. The expression "embedded" is a wide concept including "superimposition" and "insertion", such as packet multiplexing and frequency multiplexing. It is only necessary (i) that the carrier signal for carrying the program information somehow constitutes one portion of the carrier signal for carrying the broadcast program in a form associated with the broadcast program or (ii) that it is appended to the carrier signal for carrying the broadcast program. Then, by using the recording device, the received broadcast program and program information are recorded by the title unit, simultaneously with or in tandem with the reception, onto the information recording medium, such as a HDD and a DVD. The title unit herein is a recording unit constructed from at least one broadcast program, arbitrarily determined by the user who is a viewing audience of the digital broadcasting.

Particularly in the present invention, by that a specifying device, such as a CPU (Central Processing Unit), for example, detects the change of the program information, it is possible to specify the program information corresponding to the broadcast program having the longest recording time, i.e. the correspondence program information, out of the broadcast programs recorded in the title unit.

In case the user allocates the program information as the attribute information of the title unit, if the user determines the program information recorded in the head in the title unit, i.e. the program information firstly obtained by an information recording / reproducing apparatus, as the attribute information of the title unit (i.e. the program information which is a representative of the title unit), the plurality of types of program information corresponding to the plurality of broadcast programs is recorded in the title unit, so that it is highly likely different from the program information of the broadcast program that the user intends to record. Moreover, even the program information obtained a particular time after the recording is started by the information recording / reproducing apparatus is highly likely different from what the user expects.

In contrast, in the present invention, by virtue of the determining device, such as a CPU, for example, the change of the program information is detected, the separation of the plurality of broadcast programs is detected, and the time interval of the separation is measured by the CPU or the like, for example. Thus, by using the determining device, it is possible to determine the program information corresponding to the broadcast program having the longest recording time, i.e. the correspondence program information, out of the broadcast programs recorded in the title unit.

As a result, by using the determining device, such as a CPU, the correspondence program information is determined as the attribute information of the title unit. Thus, it is possible to properly allocate the program information of the broadcast program that the user intends to record, for the attribute information of the title unit.

In one aspect of the information recording apparatus of the present invention, the recording device records the embedded program information onto the information recording medium in association with the carried broadcast program, on the basis of the received carrier signal, and the determining device determines the correspondence program information by using the recorded program information.

According to this aspect, by using the recording device, the program information is recorded onto the information recording medium, together with the broadcast program. By that the determining device uses the recorded program information, the correspondence program information is determined.

Incidentally, it may be constructed such that not the program information but the correspondence program information determined by the determining device is only recorded onto the information recording medium together with the broadcast program.

In another aspect of the information recording apparatus of the present invention, the recording device further records the determined correspondence program information in association with the recorded broadcast program.

According to this aspect, the determined correspondence program information is further recorded in association with the recorded program information in addition to the title unit. By this, it is possible to more quickly allocate the program information of the broadcast program that the user intends to record, for the attribute information of the title unit.

In another aspect of the information recording apparatus of the present invention, the determining device has: a detecting device for detecting a change of the broadcast program identified by the program information; and a specifying device for specifying the broadcast program having the longest recording time, in the title unit, on the basis of the detected change, and the determining device determines the program information corresponding to the specified broadcast program as the correspondence program information, out of the embedded program information.

According to this aspect, by that the change of the program information is detected by a detecting device, such as a CPU, it is possible to detect the separation of the plurality of broadcast programs recorded in the title unit, for example. Therefore, by that the time interval of the separation is measured by the specifying device, such as a CPU, it is possible to specify the broadcast program having the longest recording time, out of the broadcast programs recorded in the title unit. Therefore, by using the determining device, such as a CPU, the program information of the specified broadcast program having the longest recording time is determined as the attribute information of the title unit, i.e. the correspondence program information. Thus, it is possible to properly allocate the program information of the broadcast program that the user intends to record, for the correspondence program information of the title unit.

In an aspect associated with the detecting device, the program information may be provided with at least one third attribute information, and the detecting device may detect that the recorded program information is changed on the basis of the third attribute information.

By virtue of such construction, the detecting device can detect the change of the program information, more accurately and quickly, on the basis of at least one of third attribute information, such as a broadcast program name and a channel number, for example.

In an aspect associated with the specifying device, the specifying device may specify the broadcast program having the longest recording time, by mutually comparing the recording times of the plurality of broadcast programs identified by a plurality of program information which is separated by the change.

By virtue of such construction, the specifying device can determine the correspondence program information, simultaneously with or in tandem with the operation of the receiving device or the recording device, more quickly and accurately, by mutually comparing the recording times of the plurality of broadcast programs. Moreover, a storing device, such a memory, is not required, so that it is possible to improve the throughput of the information recording apparatus.

Incidentally, the comparison of the recording time may be performed by at least partially using the corresponding broadcast time of the broadcast program indicated by the program information. For example, if the broadcast hours are completely included in the recording time zone, this comparison may be omitted. Moreover, for example, if the recording time of one broadcast program occupies most of the title unit, the correspondence program information can be determined without the comparison- Moreover, if the recording times of the broadcast programs are almost or fully equal, the broadcast program broadcasted in advance may be specified, as default setting.

In an aspect associated with the specifying device, the specifying device may add a margin corresponding to a jitter amount to the recording times of the plurality of broadcast programs in case of the comparison.

By virtue of such construction, the margin can absorb the jitter amount, which is a shift in the time axis direction that accompanies an instruction to record, given from the receiving device, such as a digital tuner, to the recording device, such as a DVD recorder, for example- Therefore, the specifying device can perform the comparison judgment, more accurately.

In an aspect associated with the specifying device, the specifying device may have a storing device for (i) storing i-th program information (wherein i is a natural number) before the change and (ii) storing (i+1)-th program information instead of the i-th program information, if the recording time of the broadcast program identified by the (i+1)-th program information after the change, is longer than the recording time of the broadcast program identified by the i-th program information, and the program information finally stored by the storing device may be determined as the correspondence program information.

By virtue of such construction, the specifying device can determine the correspondence program information, more quickly and accurately, by using the storing device.

In another aspect of the information recording apparatus of the present invention, the determining device determines the correspondence program information if the recording of the title unit by the recording device is stopped.

According to this aspect, the correspondence program information is determined if the recording is stopped by the user. Thus, as compared to the case where the correspondence program information is determined in the middle of the recording operation, the correspondence program information can be determined, more stably, without an influence of the operations of the receiving device and the recording device, for example.

In another aspect of the information recording apparatus of the present invention, the determining device has a time measuring device for measuring the recording time, and the time measuring device measures the recording time with a timer.

According to this aspect, it is possible to measure the recording time, more accurately, by using the timer held by the time measuring device, which is at least one portion of a controlling device, such as a CPU (Central Processing Unit), for example.

In an aspect associated with the time measuring device, the time measuring device may measure the recording time, on the basis of the number of the program information received by the receiving device.

By virtue of such construction, the time measuring device, which is at least one portion of the controlling device, such as a CPU, for example, measures the time on the basis of the number of the program information received by the receiving device. Thus, it is possible to measure the recording time, more properly and accurately.

In another aspect of the information recording apparatus of the present invention, the carrier signal is constructed such that at least one of program content data constituting the broadcast program is multiplexed by a packet unit, and the recording device records the title unit such that the broadcast program and the program content data have a hierarchy structure, on the information recording medium.

According to this aspect, it is possible to realize the more accurate and simple reproduction operation by virtue of an information reproducing device described later.

In an aspect associated with the recording device, the recording device may record the title unit, on the basis of management information for managing the hierarchy structure, on the information recording medium.

By virtue of such construction, it is possible to realize the more accurate and simple reproduction operation by virtue of the information reproducing device described later.

In an aspect associated with the management information, the determining device, if the title unit is divided, may determine the correspondence program information of the divided title unit, on the basis of the management information.

By virtue of such construction, even if the title unit is divided by the user under the control of the determining device, it is possible to determine the correspondence program information corresponding to each of the divided title unit, accurately and quickly, on the basis of the management information.

### (Information Recording Method)

The above object of the present invention can be also achieved by an information recording method provided with: a receiving process of receiving a carrier signal, which carries a broadcast program and in which program information for identifying the broadcast program is embedded at predetermined time intervals; a recording process of recording the carried broadcast program by a title unit set by a user so as to include a plurality of broadcast programs, onto an information recording medium, on the basis of the received carrier signal; and a determining process of determining program information corresponding to a broadcast program having a longest recording time in the title unit, out of the embedded program information, as correspondence program information corresponding to the title unit recorded or to be recorded, on the basis of the received carrier signal.

According to the information recording method of the present invention, it is possible to receive the various benefits owned by the information recording apparatus of the present invention.

Incidentally, in response to the various aspects of the information recording apparatus of the present invention, the information recording method of the present invention can also adopt various aspects.

### (Information Reproducing Apparatus)

The above object of the present invention can be also achieved by an information reproducing apparatus provided with a reproducing device for reproducing at least one of the title unit recorded on an information recording medium provided for the above-mentioned information recording apparatus, the information reproducing apparatus provided with: a generating device for generating title unit list information including at least one of the determined correspondence program information; and a displaying / outputting device for displaying or outputting the generated title unit list information.

According to the information reproducing apparatus of the present invention, the title unit list information, such as BML (Broadcast Markup Language) data for display a title list, can be generated by the generating device, and it can be displayed for the user and outputted to an information distributing apparatus, such as a server, connected to a network, for example.

As a result, the provision side of the broadcast program can understand the needs of the user. Thus, the interactive smooth communication can be realized between the user and the provision side of the broadcast program.

Consequently, according to the information reproducing apparatus of the present invention, it is possible to receive substantially the same benefits owned by the information recording apparatus of the present invention.

Incidentally, in response to the various aspects of the information recording apparatus of the present invention, the information reproducing apparatus of the present invention can also adopt various aspects.

### (Information Reproducing Method)

The above object of the present invention can be also achieved by an information reproducing method on an information reproducing apparatus provided with a reproducing device for reproducing at least one of the title unit recorded on an information recording medium provided for the above-mentioned information recording apparatus, the information reproducing method provided with: a generating process of generating title unit list information including at least one of the determined correspondence program information; and a displaying / outputting process of displaying or outputting the generated title unit list information.

According to the information reproducing method of the present invention, it is possible to receive the various benefits owned by the information reproducing apparatus of the present invention.

Incidentally, in response to the various aspects of the information reproducing apparatus of the present invention, the information reproducing method of the present invention can also adopt various aspects.

### (Computer Program)

The above object of the present invention can be also achieved by a first computer program of instructions for recording control and for tangibly embodying a program of instructions executable by a computer provided in the above-mentioned information recording apparatus of the present invention (including its various aspects), to make the computer function as at least one portion of the receiving device, the recording device, and the determining device.

Moreover, the above object of the present invention can be also achieved by a second computer program of instructions for reproduction control and for tangibly embodying a program of instructions executable by a computer provided in the above-mentioned information reproducing apparatus of the present invention (including its various aspects), to make the computer function as at least one portion of the reproducing device, the generating device, and the displaying / outputting device.

According to the first or second computer program of the present invention, the above-mentioned information recording apparatus or information reproducing apparatus of the present invention can be relatively easily realized as a computer reads and executes the computer program from a program storage device, such as a ROM, a CD-ROM, a DVD-ROM, and a hard disk, or as it executes the computer program after downloading the program through a communication device.

Incidentally, in response to the various aspects of the above-mentioned information recording apparatus or information reproducing apparatus of the present invention, each computer program of the present invention can also adopt various aspects.

The above object of the present invention can be also achieved by a first computer program product in a computer-readable medium for tangibly embodying a program of instructions executable by a computer provided in the above-mentioned information recording apparatus of the present invention (including its various aspects), to make the computer function as at least one portion of the receiving device, the recording device, and the determining device.

The above object of the present invention can be also achieved by a second computer program product in a computer-readable medium for tangibly embodying a program of instructions executable by a computer provided in the above-mentioned information reproducing apparatus of the present invention (including its various aspects), to make the computer function as at least one portion of the reproducing device, the generating device, and the displaying / outputting device.

According to the first or second computer program product of the present invention, the above-mentioned information recording apparatus or information reproducing apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the above-mentioned information recording apparatus or information reproducing apparatus of the present invention.

These effects and other advantages of the present invention will become more apparent from the following embodiments.

As explained above, the information recording apparatus of the present is provided with the receiving device, the recording device, and the determining device, and the information recording method of the present is provided with the receiving process, the recording process, and the determining process. Moreover, the information reproducing apparatus of the present is provided with the reproducing device, the generating device, and the displaying / outputting device, and the information reproducing method of the present is provided with the reproducing process, the generating process, and the displaying / outputting process. Therefore, it is possible to allocate the program information of the broadcast program that the user intends to record, for the attribute information of the title unit.

### Brief Description of Drawings

[FIG. 1] FIG. 1 is a received data structure diagram conceptually showing one specific example of the received data received on a receiving device, such as a digital tuner, for example of the information recording apparatus of the present invention.
[FIG. 2] FIG. 2 is a block diagram conceptually showing the basic structure of an information recording / reproducing apparatus in a first embodiment of the information recording apparatus of the present invention.
[FIG. 3] FIG. 3 is a flowchart conceptually showing a flow of the operation of the information recording / reproducing apparatus in the first embodiment of the information recording apparatus of the present invention.
[FIG. 4] FIG. 4 is a schematic diagram conceptually showing the data structure of transport stream data recorded onto a HDD mounted on the information recording / reproducing apparatus in the first embodiment of the information recording apparatus of the present invention.
[FIG. 5] FIG. 5 is a table showing a specific example of the data structure of program information of various broadcast programs included in the transport stream data recorded on the HDD mounted on the information recording / reproducing apparatus in the first embodiment of the information recording apparatus of the present invention.
[FIG. 6] FIGs. 6 are tables showing a specific example of the program information of various broadcast programs included in the transport stream data recorded on the HDD mounted on the information recording / reproducing apparatus in the first embodiment of the information recording apparatus of the present invention.
[FIG. 7] FIG. 7 is a table showing the program information In and the recording time Tn of a plurality of broadcast programs in a title recorded by a user on the HDD mounted on the information recording / reproducing apparatus in the first embodiment of the information recording apparatus of the present invention.
[FIG. 8] FIG. 8 is a title list showing attribute information of a plurality of titles recorded by the user on the HDD mounted on the information recording / reproducing apparatus in the first embodiment of the information recording apparatus of the present invention.
[FIG. 9] FIG. 9 is a flowchart conceptually showing a flow of the operation of an information recording / reproducing apparatus in a second embodiment of the information recording apparatus of the present invention.

### Description of Reference Codes

1···information recording / reproducing apparatus, 15···HDD drive, 19···DVD drive, 33···system CPU, 38···digital receiver, 100···received data, 101 (111, 121, 131, 141)···program information, 112 (122, 132, 142)···program content data, 200···title list, 201···first title Best Mode for Carrying Out the Invention

Hereinafter, the best mode for carrying out the present invention will be explained in each embodiment in order with reference to the drawings.

Hereinafter, with reference to the drawings, the embodiments of the information recording apparatus of the present invention will be explained. Incidentally, in the embodiments, an explanation will be given for an information recording / reproducing apparatus, such as a DVD recorder equipped with HDD, provided with a receiver for receiving digital terrestrial broadcasting as received data, which is one specific example of the "carrier signal" of the present invention, and for recording information onto an information recording medium, such as a hard disk drive (hereinafter referred to as a "HDD", as occasion demands), for example.

### (Received data, such as Transport Stream)

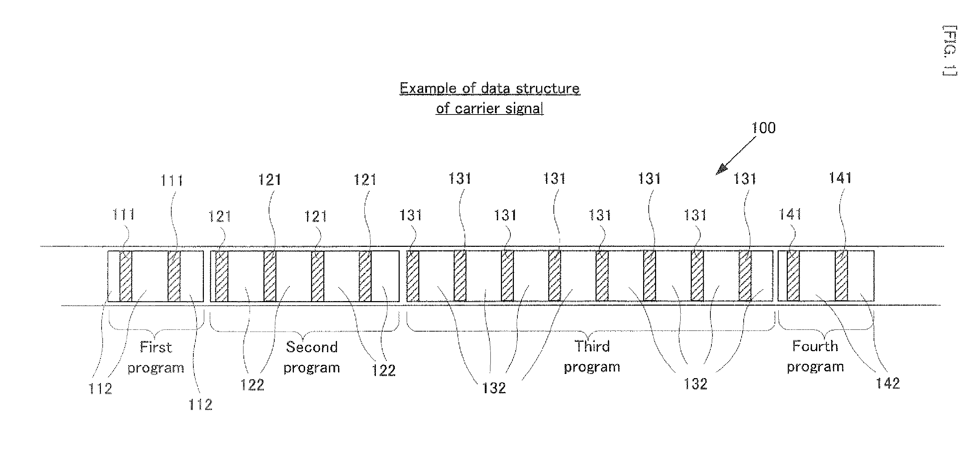

Firstly, with reference to FIG. 1, an explanation will be given for one specific example of the received data received on a receiver, such as a digital tuner, for example, mounted on an information recording apparatus. FIG. 1 is a received data structure diagram conceptually showing one specific example of the received data received on the receiving device, such as a digital tuner, for example of the information recording apparatus of the present invention.

As shown in FIG. 1, for example, received data 100 is transmitted from a broadcast station or the like and received by the receiver, such as a digital tuner, in the embodiment.

The received data 100 is constructed such that program information "1n1" (wherein "n" is an integer) and program content data "1n2" are multiplexed in a form of packet, wherein the program information is one specific example of various information constituting a broadcast program.

The program information "1n1" is constructed to be capable of identifying the "n"-th broadcast program (hereinafter referred to as the "n"-th program, as occasion demands) and to include the attribute information of the "n"-th program. Specifically, the program information "1n1" has an identification number, such as a unique code, appended in the header portion, for example, and it can be detected by retrieval, such as search, for example, by the information recording apparatus described later. Moreover, the program information "1n1" is constructed to be included in the received data 100 at predetermined time intervals, such as 1 to 2 seconds, for example. Incidentally, the detailed explanation of the program information will be described later.

The program content data "1n2" is constructed to include information, such as contents of the broadcast program. More specifically, the received data 100 in the embodiment is constructed from a first program to a fourth program. The first program includes the program information 111 and the program content data 112. The second program includes the program information 121 and the program content data 122. The third program includes the program information 131 and the program content data 132. The fourth program includes the program information 141 and the program content data 142. Incidentally, the received data, which is transmitted to the receiver by the digital terrestrial broadcasting, is constructed such that various pieces of information other than that shown in FIG. 1 are multiplexed. However, for convenience of explanation, the program information "1n1" and the program content data "1n2" are mainly shown in the embodiment.

### (First Embodiment of Information Recording Apparatus)

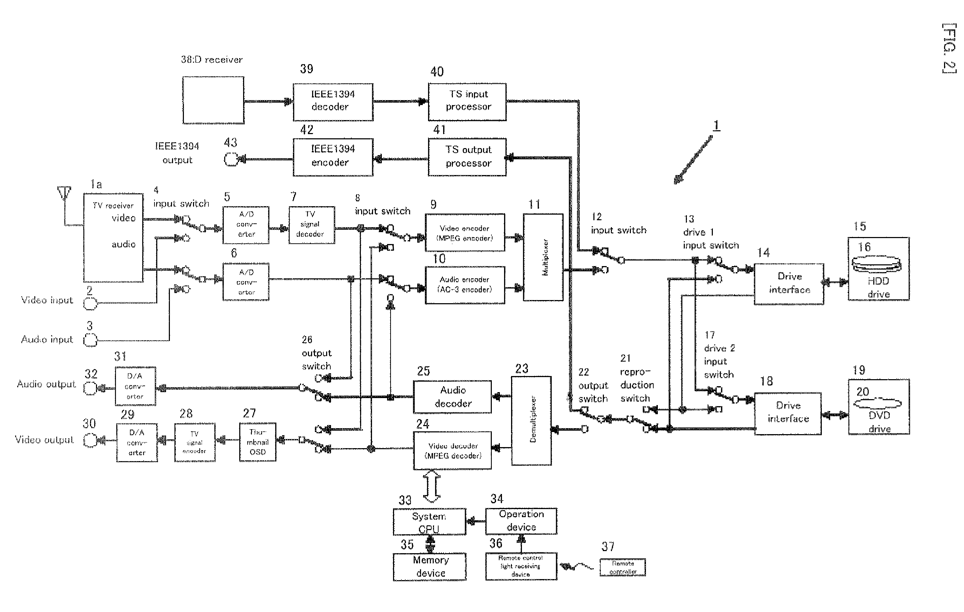

Next, with reference to FIG. 2 to FIG. 8, the first embodiment of the information recording apparatus of the present invention will be explained. Incidentally, in the explanation below, it is possible to not only record the received data but also reproduce the received data. For example, an explanation will be given with an information recording / reproducing apparatus, such as a DVD recorder equipped with HDD, for example, as one specific example of the information recording apparatus of the present invention.

### (1) Basic Structure

Firstly, with reference to FIG. 2, the basic structure of the information recording / reproducing apparatus in the first embodiment will be explained. FIG. 2 is a block diagram conceptually showing the basic structure of the information recording / reproducing apparatus in the first embodiment.

As shown in FIG. 2, an information recording / reproducing apparatus 1 is provided with: a TV receiver 1a; a video input 2; an audio input 3; an input switch 4; an A/D (Analog to digital) converter 5; an A/D converter 6; a TV signal decoder 7; an input switch 8; a video encoder 9; an audio encoder 10; a multiplexer 11; an input switch 12; a drive 1 input switch 13; a drive interface 14; a HDD drive 15; a HDD 16; a drive 2 input switch 17; a drive interface 18; a DVD drive 19; a DVD 20: a reproduction switch 21; an output switch 22; a demultiplexer 23; an image decoder 24; an audio decoder 25; an output switch 26; a thumbnail OSD 27; a TV signal encoder 28; a D/A converter 29; a video output 30; a D/A (Digital to Analog) converter 31; an audio output 32; a system CPU 33; an operating device 34; a memory device 35; a remote control light receiving device 36; a remote controller 37; a digital receiver 38; an IEEE 1394 decoder 39; a TS input processor 40; a TS output processor 41; an IEEE 1394 encoder 42; and an IEEE 1394 output 43.

### (2) Outline Operation

### (2-1) In case of recording digital terrestrial broadcasting

Next, with reference to FIG. 2, the outline operation in case of the recording of the digital terrestrial broadcasting will be given together with the detailed structure.

Firstly, the digital receiver 38 receives the digital terrestrial broadcasting, which is one specific example of the received data.

The IEEE decoder 39 converts a transport stream in IEEE 1394 format inputted via the digital receiver 38, to a normal transport stream, and outputs it to the TS input processor 40.

The TS input processor 40 converts the inputted normal transport stream to transport stream data for HDD recording (hereinafter referred to as "TS data for HDD recording", as occasion demands), and outputs it to the input switch 12.

The drive interface 14 compliant with the standard, such as ATAPI, is connected to the HDD drive 15, and the drive 1 input switch 13 for switching the output from the input switch 12 is connected to the drive interface 14. The drive 1 input switch 13 switches an input source, under the control of the system CPU 33.

The HDD drive 15 is intended to record the stream (TS or PS) inputted via the input switch 12, onto the HDD 16.

In particular, on the information recording / reproducing apparatus 1, when the transport stream data for HDD recording is recorded onto the HDD drive 15, the program information embedded in the transport stream is obtained, and a time in which the program information capable of identifying the same broadcast program can be obtained is calculated as the recording time of the broadcast program.

The system CPU 33 determines the program information with the longest recording time from the program recording time obtained during the recording when an instruction to stop the recording is given from the remote controller 37, and records the program information as the program information which is the representative of the title, onto the HDD drive 15 in association with the transport stream data for HDD recording.

### (2-2) In case of outputting to Exterior from HDD and displaying thumbnail

On the information recording / reproducing apparatus 1, the TS output processor 41 converts the inputted transport stream data for HDD recording to a normal transport stream, and outputs it to the IEEE 1394 encoder 42. The IEEE 1394 encoder 42 converts the inputted normal transport stream to the transport stream in IEEE 1394 format, and outputs it to the exterior via the IEEE 1394 output 43. Moreover, it is possible to use the representative program information of each title recorded on the HDD drive 15, to thereby display a list of the recording content of each title, i.e. thumbnail, on the thumbnail OSD 27, or to convert it to BML (Broadcast Markup Language) data for displaying a title list of the transport stream on the memory device 35 by using the system CPU 33, and output it from the TW output processor 41, through the IEEE 1394 encoder 42, and out of the IEEE 1394 output 43.

### (2-3) In case of receiving analog broadcasting and dubbing it

The TV receiver 1a receives a RF signal, such as VHF and BS, converts a signal wave received in synchronization with a selected received bandwidth, to an IF signal, demodulates it to an audio signal and a video signal for TV, and outputs it to the input switch 4.

The input switch 4 selectively switches between the signal outputted from the TV receiver 1a and the signal from the video input 2 or the audio input 3, and outputs the video signal to the A/D (Analog to digital) converter 5 and the audio signal to the A/D converter 6.

The A/D converter 5 converts the analog signal for TV, selected by the input switch 4, to a digital signal and outputs it to the TV signal decoder 7.

The signal decoder 7 decodes the inputted digital signal for TV. converts it to the normal video signal of an NTSC type or the like, and outputs it to the input switch 8.

The A/D converter 6 converts the analog audio signal selected by the input switch 4 to a digital audio signal, and outputs it to the input switch 8.

On the input switch 8, the video signal outputted from the TV signal decoder 7, the audio signal outputted from the A/D converter 6, and a video signal and an audio signal which are outputted from the HDD drive or the DVD drive 19 and are decoded in case of the dubbing from the HDD to the DVD and the dubbing from the DVD to the HDD, are inputted. The input switch 8 selects any of the inputted video signals and audio signals, on the basis of the control of the system CPU 33 descried later, and outputs the selected video signal to the video encoder 9 and the selected audio signal to the audio encoder 10.

The video encoder 9 converts the video signal selected by the input switch 8 to video data in MPEG format and outputs it to the multiplexer 11.

The audio encoder 10 converts the audio signal selected by the input switch 8 to video data in AC-3 format and outputs it to the multiplexer 11.

The multiplexer 11 generates a program stream on the basis of the inputted video data and audio data, and outputs it to the input switch12.

On the input switch12, the program stream outputted from the multiplexer 11 and a transport stream outputted from the TS input processor 40 described later are inputted. The input switch 12 selects the inputted stream on the basis of the control of the system CPU 33 and outputs it to the drive 1 input switch 13 and the drive 2 input switch 17.

The drive interface 14 compliant with the standard, such as ATAPI, is connected to the HDD drive 15, and the drive 1 input switch 13 for switching between the output from the DVD drive 19 and the output from the input switch 12 is connected to the drive interface 14.

The drive 1 input switch 13 switches the input source, by the control of the system CPU 33.

Moreover, the HDD drive 15 is designed to read the stream recorded in advance on the HDD 16, output it to the reproduction switch 21 via the drive interface 14, and record the stream inputted via the input switch 12 onto the HDD 16.

The drive interface 18 compliant with the standard, such as ATAPI, is connected to the DVD drive 19, and the drive 2 input switch 17 for switching between the output from the HDD drive 19 and the output from the input switch 12 is connected to the drive interface 18. The drive 2 input switch 17 switches the input and output, by the control of the system CPU 33, as in the drive 1 input switch 13. Moreover, the DVD drive 19, as in the HDD drive 15, is designed to read the stream recorded in advance, output it to the reproduction switch 21 via the drive interface 18, and record the stream inputted via the input switch 12 onto the DVD 20.

The reproduction switch 21 selects either one of the stream outputted from the HDD drive 15 via the drive interface 14 and the stream outputted from the DVD drive 19 via the drive interface 18, on the basis of the control of the system CPU 33, and outputs it to the output switch 22.

The output switch 22 selectively switches the stream inputted from the reproduction switch 21 on the basis of the control of the system CPU 33, and outputs the program stream to the demultiplexer 23 and the transport stream to the TS output processor 41 described later.

The demultiplexer 23 demuliplexes the video data having MPEG format and the audio data having AXC-3 format from the program stream selected by the output switch 22, and outputs the demultiplexed video data to the image decoder 24 and the demultiplexed audio data to the audio decoder 25.

The image decoder 24 decodes the inputted video data in MPEG format and converts it to the video signal, and outputs the decoded digital signal to the output switch 26.

The audio decoder 25 decodes the inputted audio data in AC-3 format and converts it to the audio signal, and outputs the decoded digital audio signal to the output switch 26.

On the output switch 26, the digital video signal outputted from the TV signal decoder 7, the digital audio signal outputted from the A/D converter 6, and the digital image signal and the digital audio signal respectively decoded by the image decoder 24 and the audio decoder 25, are inputted. The output switch 26 switches the inputted video signal and audio signal, on the basis of the control of the system CPU 33, and outputs the video signal to the thumbnail OSD 27 and the audio signal to the D/A (Digital to Analog) converter 31.

The thumbnail OSD 27 superimposes required text information or the like onto the inputted video signal, and outputs it to the TV signal encoder 28.

The TV signal encoder 28 converts the inputted video signal into a video format for TV, in order to display it on an external monitor or the like, and outputs it to the D/A converter 29.

The D/A converter 29 converts the inputted digital video signal for TV to the analog signal, and outputs it to the exterior via the video output 30.

The D/A converter 31 converts the inputted digital audio signal for TV to the analog signal, and outputs it to the exterior via the audio output 32.

The system CPU 33 includes various input / output ports, such as a key input port and a display device output port, and controls all the general functions for each process of the recording and reproduction of the HDD 16 or the recording and reproduction of the DVD 20. Incidentally, the system CPU 33 is designed to read a control program stored on the memory device 35 and perform each process in the recording and reproduction of the HDD 16 or the recording and reproduction of the DVD 20, and to temporarily hold the in-process data on the memory device 35.

The operation device 34 is provided with various confirmation buttons and many keys, such as number keys and up, down, left and right cursor keys, and outputs a predetermined signal outputted from the remote control light receiving device 36, or in accordance with the key operation.

The remote control light receiving device 36 receives a light beam, such as infrared light, emitted from the remote controller 37, converts it to the predetermined signal, and outputs it to the operation device 34.

The remote controller 37, as in the operation device 34, is provided with various confirmation buttons and many keys, such as number keys and up, down, left and right cursor keys.

### (Operation Principle)

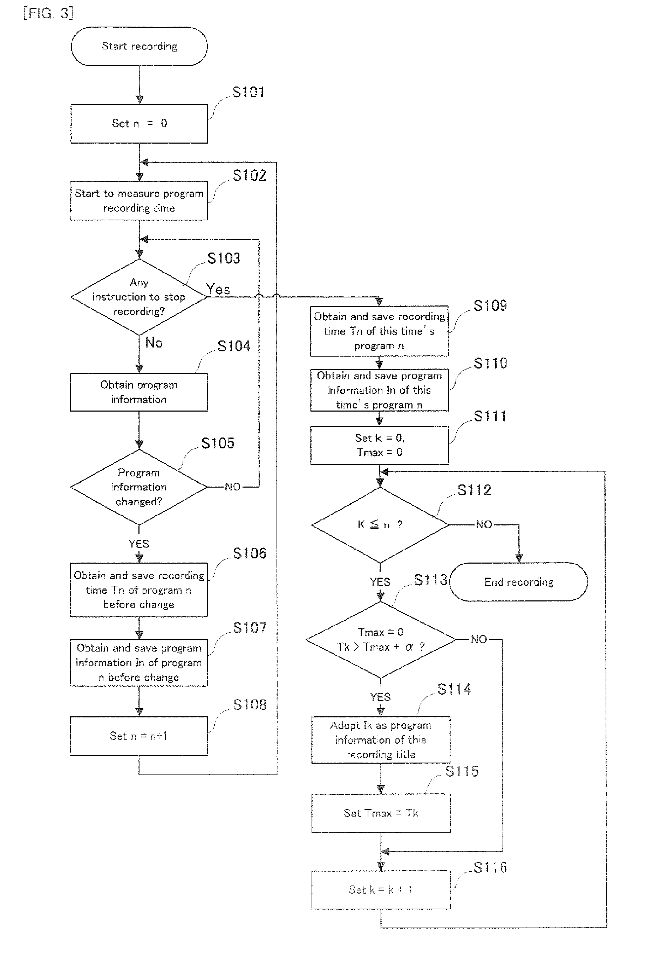

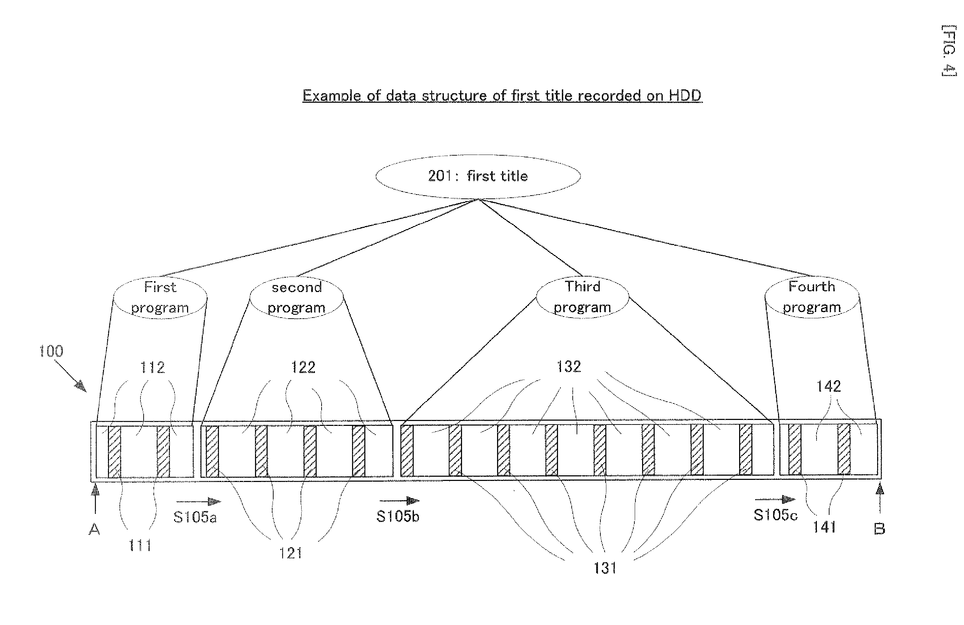

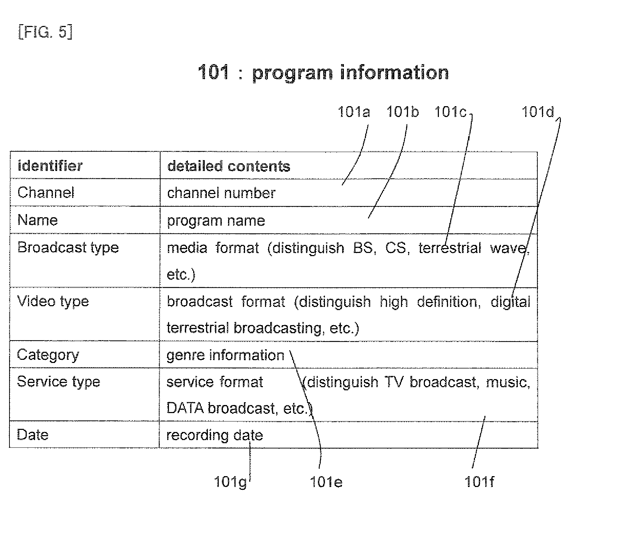

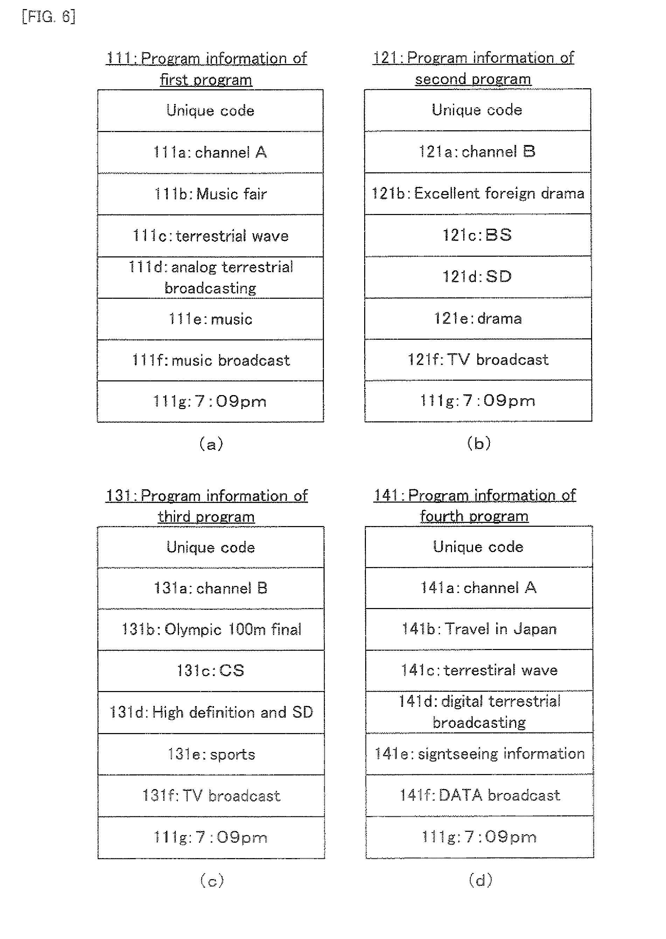

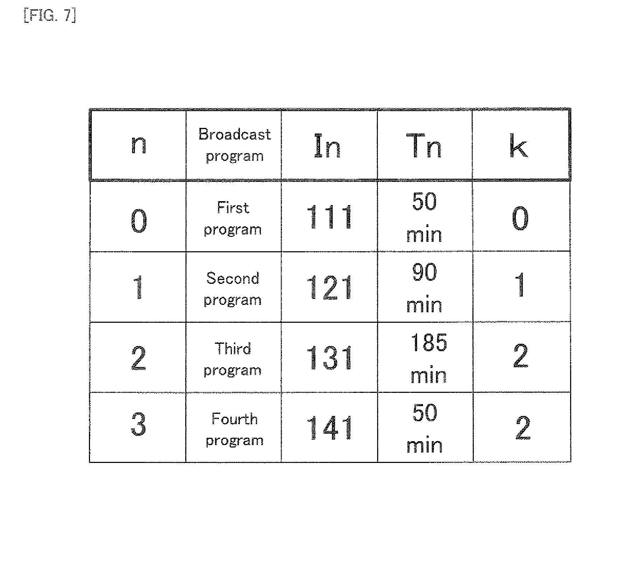

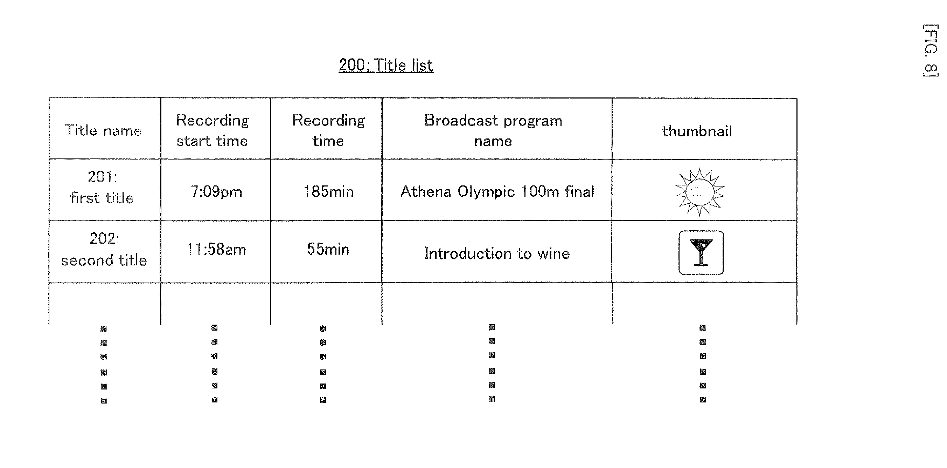

Next, with reference to the above-mentioned FIG. 2 in addition to FIG. 3 to FIG. 8, a detailed explanation will be given for the operation principle of the information recording / reproducing apparatus in the first embodiment. FIG. 3 is a flowchart conceptually showing a flow of the operation of the information recording / reproducing apparatus in the first embodiment of the information recording apparatus of the present invention. FIG. 4 is a schematic diagram conceptually showing the data structure of transport stream data recorded onto the HDD mounted on the information recording / reproducing apparatus in the first embodiment of the information recording apparatus of the present invention. FIG. 5 is a table showing a specific example of the data structure of program information of various broadcast programs included in the transport stream data recorded on the HDD mounted on the information recording / reproducing apparatus in the first embodiment of the information recording apparatus of the present invention. FIGs. 6 are tables showing a specific example of the program information of various broadcast programs included in the transport stream data recorded on the HDD mounted on the information recording / reproducing apparatus in the first embodiment of the information recording apparatus of the present invention. FIG. 7 is a table showing the program information In and the recording time Tn of a plurality of broadcast programs in a title recorded by a user on the HDD mounted on the information recording / reproducing apparatus in the first embodiment of the information recording apparatus of the present invention. FIG. 8 is a list of the title showing attribute information of a plurality of titles recorded by the user on the HDD mounted on the information recording / reproducing apparatus in the first embodiment of the information recording apparatus of the present invention.

### (3-1) Recording of Transport Stream, and Obtaining and Saving of Program Information

As shown in FIG. 3, firstly, under the control of the system CPU 33, "0" is stored into a variable "n" on the storing device, such as the memory device 35, for example (step S101).

Then, for example, if a command, such as an "instruction to record", is transmitted from the digital receiver 38 to the system CPU 33, the measurement of the recording time of the "n"-th broadcast program is started (step S102). More specifically, the recording of the received data 100, such as the TS data for HDD recording including the first program, for example, onto the HDD is started in the same format from a recording start time point shown by an arrow "A" in FIG. 4.

Then, under the control of the system CPU 33, it is judged whether or not an instruction to stop the recording of the broadcast program is given from the user (step S103). Here, as a result of the judgment in the step S103, if the instruction to stop the recording of the broadcast program is not given from the user (the step S103: No), the program information transmitted at predetermined time intervals is continuously obtained (step S104). The program information herein is constructed to be capable of identifying one broadcast program and to include the attribute information of the one broadcast program. Specifically, the program information has a unique code, appended in the header portion, for example, and it can be detected by retrieval, such as search, for example, by the information recording apparatus 1. The program information is constructed to be included in the received data 100 at predetermined time intervals, such as 1 to 2 seconds, for example.

As shown in FIG. 5, the program information 101 is constructed to include the following seven types of attribute information, for example; namely, a channel number 101a, a program name 101b, a media format 101c, a broadcast format 101d, genre information 101e, a service format 101f, and a recording date 101g.

The channel number 101a indicates a so-called channel of a frequency bandwidth or the like, such as a "channel A", for example. The identifier of the channel number 101a is "Channel".

The broadcast program name 101b indicates the name of the broadcast program, such as "Music Fair". The identifier of the broadcast program name 101b is "Name".

The media format 101c indicates the transmission form of the broadcast program, such as BS (Broadcasting Satellite), CS (Communication Satellite), and digital terrestrial broadcasting. The identifier of the media format 101c is "Broadcast type".

The broadcast format 101d indicates the broadcast form of the broadcast program, such as digital high-definition broadcast (HD), and digital standard-definition broadcast (SD broadcast) which is equivalent to the terrestrial broadcasting (or a ground broadcasting). The identifier of the broadcast format 101d is "Video type".

The genre information 101e indicates the genre of the broadcast program, such as music, drama, sports, and sightseeing information. The identifier of the genre information 101e is "Category".

The service format 101f indicates the provided service format of the broadcast program, such as video broadcasting like TV broadcasting, music broadcasting, data broadcasting, and text broadcasting. The identifier of the service format 101f is "Service type".

The recording date 101g indicates the date and time that the information recording / reproducing apparatus 1 performs the recording onto the information recording medium, such as the HDD, for example. The identifier of the recording date 101g is "Date".

Incidentally, FIGS. 6 show one specific example of the program information 111 of the first program to the program information 141 of the fourth program.

Again, as shown in FIG. 4, in the step S104, more specifically, (i) the program information 111 included in the received data 100, such as the TS data for HDD recording including the first program, for example, and (ii) the program content data 112 are obtained from the recording start time point shown by the arrow "A" in FIG. 4, and the recording onto the HDD is continued.

In particular, the broadcast program that the user desires, is constructed as a first title 201, which is one specific example of the "title unit" of the present invention, and it is recorded onto the HDD of the information recording / reproducing apparatus 1. The first title 201 may be constructed such that a plurality of program content data and a plurality of broadcast programs have a hierarchy structure. The first title 201 having this hierarchy structure may be constructed to manage the plurality of program content data and the plurality of broadcast programs by using management information.

Then, under the control of the CPU 33, it is judged whether or not the program information obtained and continuously recorded is changed (step S105). Incidentally, immediately after the recording is started by the information recording / reproducing apparatus 1, as described above, when the program information 111 is firstly obtained, the step S105 is omitted. More specifically, in an "arrow S105a" in FIG- 4, it is detected whether or not the program information 111 of the first program is changed to the program information 121 of the second program. In particular, the judgment of whether or not it is changed may be performed by using particular information, such as the broadcast program name 101b, for example, as a judgment reference, out of the seven types of attribute information explained in the above-mentioned FIG. 5. More specifically, as shown in FIGs. 6, in the case of the broadcast program name, such as "Music Fair (first program)", "excellent foreign drama (second program)", " Athena Olympic 100m final (third program)", and "Travel in Japan (fourth program)", the program information can be uniquely identified, so that it is possible to accurately perform the judgment of whether or not the program information is changed. On the other hand, if the recording of the first title 201 is started at "7:09pm", the recording date 101g is common in all the program information (111, 121, 131, and 141) included in the first title 201 and will never changed, as shown in FIGs. 6, so that it is not preferable as the judgment reference of the change. Moreover, as in the case of the broadcast format 101d of the third program shown in FIGs. 6, there is a possibility of changing from the high definition to SD even in the same broadcast program, so that it is also not preferable as the judgment reference of the change.

Here, if the program information is changed (the step S105: Yes), under the control of the system CPU 33, a variable "Tn" indicating the recording time of the "n"-th broadcast program before the change, is obtained and stored into the memory device 35 (step S106). More specifically, as shown on a table in FIG. 7, as the information about the first program, which is the "n"-th (i.e. n=0 program information, the variable "T0" indicating the recording time is stored as 50 min (minutes).

Then, a variable "In" indicating the program information of the "n"-th broadcast program before the change, is obtained and stored into the memory device 35 (step S107). More specifically, as shown on the table in FIG. 7, as the information about the first program, which is the "n"-th (i.e. n=0) program information, the variable "10" indicating the program information is stored as the program information 111.

Then, the variable "n" is incremented by "1"; namely, n=1 (step S108). At the same time, under the control of the system CPU 33, the measurement of the recording time of the "1"-st broadcast program is newly started (the step S102).

Until the instruction to stop the recording of the broadcast program is issued, the step S102 to the step S108 are repeated. More specifically, in an arrow "S105b" in FIG. 4, the change from the program information 121 of the second program to the program information 131 of the third program is detected. Thus, as shown on the table in FIG. 7, as the information about the second program, which is the "1"-th (i.e. n=1) broadcast program, the variable "T1" indicating the recording time is stored as 90min, and variable "I1" indicating the program information is stored as the program information 121. In the same manner, in an arrow "S105c" in FIG. 4, the change from the program information 131 of the third program to the program information 141 of the fourth program is detected. Thus, as shown on the table in FIG. 7, as the information about the third program, which is the "2"-nd (i.e. n=2) broadcast program, the variable "T2" indicating the recording time is stored as 185min, and variable "12" indicating the program information is stored as the program information 131.

On the other hand, as a result of the judgment in the step S103, if the instruction to stop the recording of the broadcast program is given by the user in an arrow "B" in FIG. 4 (the step S103:Yes), the variable "Tn" indicating the recording time of the nearest "n"-th broadcast program, is obtained and stored onto the memory device 35 (step S109). More specifically, as shown on the table in FIG. 7, as the information about the fourth program, which is the "3"-rd (i.e. n=3) broadcast program, the variable "T3" indicating the recording time is stored as 50min.

Then, the variable "In" indicating the program information of the nearest "n"-th broadcast program is obtained and stored onto the memory device 35 (step S110). More specifically, as shown on the table in FIG. 7, as the information about the fourth program, which is the "3"-rd (i.e. n=3) broadcast program, the variable "13" indicating the program information is stored as the program information 141.

### (3-2) Determination of Longest Recording Time

Next, with reference to the following steps S111 to S116, an explanation will be given for the operation of (i) searching for the broadcast program having the longest recording time and (ii) determining the program information of the relevant broadcast program as the attribute information of the title, under the control of the system CPU 33, on the basis of the information (refer to FIG. 7) about the plurality of broadcast programs (i.e. the first to fourth programs) stored on the memory device 35. Incidentally, the step S111 to the step S116 adopts algorithm for searching for the program information of the broadcast program having the longest recording time by sequentially incrementing a variable "k" from "0" to "n" and by comparing all the recording time.

Firstly, "0" is substituted to the variable "k", and "0" is substituted to a variable "Tmax" indicating the longest recording time (step S111).

Then, it is judged whether or not the variable "k" (i.e. k=0) is equal to or less than the above-mentioned variable "n" (more specifically, "n"="3" or "n" is less than "3") (step S112). Here, if the variable "k" (i.e. k=0) is equal to or less than the variable "n" (i.e. n=3 or less) (the step S112: Yes), it is further judged whether or not the "Tmax" indicating the longest recording time is "0", or whether or not the recording time "Tk" of the "k"-th broadcast program is greater than the sum of the longest recording time "Tmax" and a predetermined constant "α" indicating a jitter value which is variation in a time axis direction (step S113). Incidentally, "α may be set about dozen seconds, or may be set 1 to 10 min by the setting of the tuner. Here, if the longest recording time "Tmax" is "0", or the recording time "Tk" of the "k"-th broadcast program is greater than the sum of the longest recording time "Tmax" and the predetermined constant "α" indicating the jitter value (the step S113: Yes), the program information "Ik" of the "k"-th broadcast program is tentatively determined as the program information of the first title 201 (step S114).

Then, the recording time "Tk" of the "k"-th broadcast program is set the longest recording time "Tmax" (step S115).

Then, the variable "k" is incremented by "1" (step S116).

Then, as described above, again, it is judged whether or not the variable "k" is equal to or less than the variable "n" (the step S112).

On the other hand, as a result of the judgment in the step S112, if the variable "k" is greater than the variable "n" (the step S112: No), a series of recording operation is ended.

Consequently, as shown in FIG. 7, the variable "k" for determining the longest recording time is set "2", the recording time "T2" of 185min of the third program, which is the "n=2"-the broadcast program, is set the longest recording time, and the variable "12", which is the program information 131, indicating the program information of the third program is determined as the attribute information of the first title 201.

As a result, it is possible to generate a title list 200 shown in FIG- 8, in a form of file or the like, on the memory device 35 under the control of the system CPU 33. More specifically, the title list 200 may be designed to display a small data amount of video images, such as thumbnail video images, for example, in addition to "7:09pm" as the recording date 131g, 185min as the recording time, and "Athena Olympic 100m final" as the broadcast program name, from the program information 131 determined as the attribute information of the first title 201.

### (Second Embodiment of Information Recording Apparatus)

Next, the second embodiment of the information recording apparatus of the present invention will be explained. Incidentally, the structure and basic operation of the second embodiment of the information recording apparatus of the present invention are substantially the same as those in the first embodiment described above.

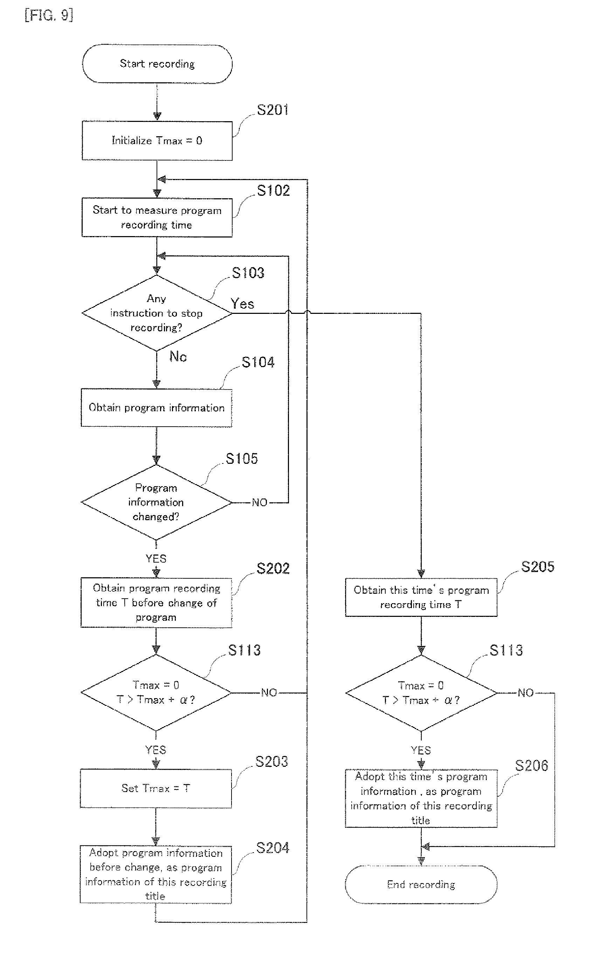

Next, with reference to FIG. 9, the operation of the second embodiment of the information recording apparatus of the present invention will be explained. FIG. 9 is a flowchart conceptually showing a flow of the operation of an information recording / reproducing apparatus in the second embodiment of the information recording apparatus of the present invention.

Firstly, as shown in FIG. 9, "Tmax" indicating the longest recording time is initialized, and "0" is substituted to "Tmax" (step S201).

Then, for example, if a command, such as an "instruction to record", is transmitted from the digital receiver 38 to the system CPU 33, the measurement of the recording time of the "n"-th broadcast program is started (the step S102).

Then, under the control of the system CPU 33, it is judged whether or not an instruction to stop the recording of the broadcast program is given from the user (the step S103). Here, as a result of the judgment in the step S103, if the instruction to stop the recording of the broadcast program is not given from the user (the step S103: No), the program information transmitted at predetermined time intervals is continuously obtained (the step S104).

Then, under the control of the CPU 33, it is judged whether or not the program information obtained and continuously recorded is changed (the step S105). Here, if the program information is changed (the step S105: Yes), under the control of the system CPU 33, a variable "T" indicating the recording time of the broadcast program before the change is obtained and stored into the memory device 35 (step S202).

Then, it is further judged whether or not the "Tmax" indicating the longest recording time is "0", or whether or not the recording time "T" of the broadcast program obtained and stored is greater than the sum of the longest recording time "Tmax" and the predetermined constant "α" indicating the jitter value which is variation in the time axis direction (the step S113). Here, if the longest recording time "Tmax" is "0", or the recording time "T" of the broadcast program before the change is greater than the sum of the longest recording time "Tmax" and the predetermined constant "α" indicating the jitter value (the step S113, Yes), the recording time "T" of the broadcast program before the change is substituted to the longest recording time "Tmax" (step S203).

Then, the program information of the broadcast program before the change is tentatively determined as the program information of the first title 201 (step S204), and under the control of the system CPU 33, the measurement of the recording time of a new broadcast program is started (the step S102).

On the other hand, as a result of the judgment in the step S103, if the instruction to stop the recording of the broadcast program is given by the user (the step S103: Yes), the variable "T" indicating the recording time of the currently recording broadcast program is obtained and stored onto the memory device 35 (step S205).

Then, as described above, it is judged whether or not the "Tmax" indicating the longest recording time is "0", or whether or not the recording time "T" of the broadcast program obtained and stored is greater than the sum of the longest recording time "Tmax" and the predetermined constant "α " indicating the jitter value which is variation in the time axis direction (the step S113). Here, if the longest recording time "Tmax" is "0", or the recording time "T" of the broadcast program before the change is greater than the sum of the longest recording time "Tmax" and the predetermined constant "α" indicating the jitter value (the step S113: Yes), the program information "Ik" of the currently recording broadcast program is definitely determined as the program information of the first title 201 (step S206).

On the other hand, if the longest recording time "Tmax" is not "0", or the recording time "T" of the broadcast program before the change is not greater than the sum of the longest recording time "Tmax" and the predetermined constant "α" indicating the jitter value (the step S113: No), the step S206 is omitted, and the program information determined before the currently recording broadcast program, is definitely determined as the program information of the first title 201.

In the above-mentioned embodiments, digital terrestrial broadcasting is taken as an example as the received data of the broadcast wave. The present invention, however, can be applied in all broadcast forms of appending the program information to the broadcast program and distributing it, via BS (Broadcasting Satellite), CS (Communication Satellite), and the Internet.

Moreover, in the above-mentioned embodiments, the DVD recorder (player) equipped with HDD is explained as one example of the information recording apparatus. The present invention, however, is not limited to the recorder (player) of a magnetic disk and an optical disc, and can be applied to other various recording media and the recorder (player) thereof.

The present invention is not limited to the above-described embodiments, and various changes may be made, if desired, without departing from the essence or spirit of the invention which can be read from the claims and the entire specification. An information recording apparatus, an information recording method, an information reproducing apparatus, an information reproducing method, and a computer program for recording control or for reproduction control, which involve such changes, are also intended to be within the technical scope of the present invention.

### Industrial Applicability

The information recording apparatus and method, the information reproducing apparatus and method, and the computer program of the present invention can be applied to an information recording / reproducing apparatus, such as a DVD recorder and a DVD player, for example. Moreover, they can be applied to an information recording / reproducing apparatus or the like, which is mounted on or can be connected to various computer equipment for consumer use or business use, for example.

## Claims

1. An information recording apparatus comprising:
a receiving device for receiving a carrier signal, which carries a broadcast program and in which program information for identifying the broadcast program is embedded at predetermined time intervals;
a recording device for recording the carried broadcast program by a title unit set by a user so as to include a plurality of broadcast programs, onto an information recording medium, on the basis of the received carrier signal; and
a determining device for determining program information corresponding to a broadcast program having a longest recording time in the title unit, out of the embedded program information, as correspondence program information corresponding to the title unit recorded or to be recorded, on the basis of the received carrier signal.

2. The information recording apparatus according to claim 1, wherein
said recording device records the embedded program information onto the information recording medium in association with the carried broadcast program, on the basis of the received carrier signal, and
said determining device determines the correspondence program information by using the recorded program information.

3. The information recording apparatus according to claim 1, wherein said recording device further records the determined correspondence program information in association with the recorded broadcast program.

4. The information recording apparatus according to claim 1, wherein
said determining device has:
a detecting device for detecting a change of the broadcast program identified by the program information; and
a specifying device for specifying the broadcast program having the longest recording time, in the title unit, on the basis of the detected change, and
said determining device determines the program information corresponding to the specified broadcast program as the correspondence program information, out of the embedded program information.

5. The information recording apparatus according to claim 4, wherein the specifying device specifies the broadcast program having the longest recording time, by mutually comparing the recording times of the plurality of broadcast programs identified by a plurality of program information which is separated by the change.

6. The information recording apparatus according to claim 5, wherein the specifying device adds a margin corresponding to a jitter amount to the recording times of the plurality of broadcast programs in case of the comparison.

7. The information recording apparatus according to claim 4, wherein
the specifying device has a storing device for storing i-th program information (wherein i is a natural number) before the change and storing (i+1)-th program information instead of the i-th program information if the recording time of the broadcast program identified by the (i+1)-th program information after the change is longer than the recording time of the broadcast program identified by the i-th program information, and
the program information finally stored by the storing device is determined as the correspondence program information.

8. The information recording apparatus according to claim 1, wherein said determining device determines the correspondence program information if the recording of the title unit by said recording device is stopped.

9. The information recording apparatus according to claim 1, wherein
said determining device has a time measuring device for measuring the recording time, and
the time measuring device measures the recording time with a timer.

10. The information recording apparatus according to claim 9, wherein the time measuring device measures the recording time, on the basis of the number of the program information received by said receiving device.

11. The information recording apparatus according to claim 1, wherein
the carrier signal is constructed such that at least one of program content data constituting the broadcast program is multiplexed by a packet unit, and
said recording device records the title unit such that the broadcast program and the program content data have a hierarchy structure, on the information recording medium.

12. The information recording apparatus according to claim 11, wherein said recording device records the title unit, on the basis of management information for managing the hierarchy structure, on the information recording medium.

13. The information recording apparatus according to claim 12, wherein said determining device, if the title unit is divided, determines the correspondence program information of the divided title unit, on the basis of the management information.

14. An information recording method comprising:
a receiving process of receiving a carrier signal, which carries a broadcast program and in which program information for identifying the broadcast program is embedded at predetermined time intervals;
a recording process of recording the carried broadcast program by a title unit set by a user so as to include a plurality of broadcast programs, onto an information recording medium, on the basis of the received carrier signal; and
a determining process of determining program information corresponding to a broadcast program having a longest, recording time in the title unit, out of the embedded program information, as correspondence program information corresponding to the title unit recorded or to be recorded, on the basis of the received carrier signal.

15. An information reproducing apparatus comprising a reproducing device for reproducing at least one of the title unit recorded on an information recording medium provided for the information recording apparatus according to claim 1, said information reproducing apparatus comprising:
a generating device for generating title unit list information including at least one of the determined correspondence program information; and
a displaying / outputting device for displaying or outputting the generated title unit list information.

16. An information reproducing method on an information reproducing apparatus comprising a reproducing device for reproducing at least one of the title unit recorded on an information recording medium provided for the information recording apparatus according to claim 1, said information reproducing method comprising:
a generating process of generating title unit list information including at least one of the determined correspondence program information; and
a displaying / outputting process of displaying or outputting the generated title unit list information.

17. A computer program of instructions for recording control and for tangibly embodying a program of instructions executable by a computer provided in the information recording apparatus according to claim 1, to make the computer function as at least one portion of said receiving device, said recording device, and said determining device.

18. A computer program of instructions for reproduction control and for tangibly embodying a program of instructions executable by a computer provided in the information reproducing apparatus according to claim 15, to make the computer function as at least one portion of said reproducing device, said generating device, and said displaying / outputting device.
